# EUROPEAN PATENT APPLICATION

(11) **EP 4 418 378 A1**
(43) Date of publication of application: **21.08.2024**
(21) Application number: 22881196.4
(22) Date of filing: 26.08.2022
(51) Int. Cl.: H01M 10/04, B65H 3/08, B65H 5/08

(54) **ELECTRODE PLATE LOADING DEVICE FOR SECONDARY BATTERY**

(30) Priority: 15.10.2021 KR 20210137310
(71) Applicant: Woowon Technology Co., Ltd, Pyeongtaek-si 17704 (KR)
(72) Inventor: KIM, Tae Wan, Hwaseong-si Gyeonggi-do 18515 (KR)
(74) Representative: SJW Patentanwälte
(86) International application number: PCT/KR2022/012793
(87) International publication number: WO 2023/063566

(57) **Abstract**

Disclosed is an electrode plate-loading device for secondary batteries. The electrode plate-loading device for secondary batteries comprises a pick-up unit for picking up electrode plates one by one; and first and second loading units for receiving the electrode plate picked up by the pick-up unit and alternately loading the received electrode plate on the align table, in which while the first loading unit performs the operation of loading the received electrode plate on the align table, the second loading unit performs the operation of receiving other electrode plate from the pick-up unit, and while the second loading unit performs the operation of loading other received electrode plate on the align table, the first loading unit performs the operation of receiving another electrode plate from the pick-up unit.

## Description

### [Technical Field]

The present disclosure relates to an electrode plate-loading device for secondary batteries that loads electrode plates stacked in a magazine unit one by one on an align table, and more particularly, to an electrode plate-loading device for secondary batteries, which allows loading electrode plates on an align table at high speed.

### [Background Art]

This section provides background information related to the present disclosure which is not necessarily prior art.

Generally, a chemical cell is a battery composed of a pair of electrodes (a positive electrode plate and a negative electrode plate) and an electrolyte. The amount of energy that can be stored varies depending on the materials that constitute the electrodes and the electrolyte.

These chemical cells are divided into primary batteries, which are used only for one-time discharge, and secondary batteries, which can be reused through repeated charging and discharging.

Secondary batteries are applied to various technological fields across industries due to the repeated charging and discharging described above. For example, secondary batteries are widely used as an energy source for advanced electronic devices such as wireless mobile devices. They are also being used as an energy source for hybrid and electric vehicles, which are being proposed as a solution to air pollution from conventional gasoline and diesel internal combustion engines that use fossil fuels.

As everyone knows, a secondary battery consists of a positive electrode plate, a separator, and a negative electrode plate sequentially stacked in the form of immersion in electrolyte solution. There are two main ways to manufacture the internal cell stack of a secondary battery.

In other words, for small secondary batteries, negative electrode plates and positive electrode plates are placed on a separator, which is often made into a jelly-roll shape by winding. For medium and large-sized secondary batteries with higher electric capacity, stacking of negative electrode plates, positive electrode plates, and separators is often used.

In addition, there are several ways to make the cell stack inside the secondary battery by stacking. However, in the Z-stacking method among the several ways, the separators are stacked in a zigzag fold, with negative and positive electrode plates alternately inserted between the separators.

At this time, the negative electrode plate and positive electrode plate are absorbed one by one by the respective loading device and loaded on the respective align table. Then, each negative electrode plate and positive electrode plate aligned on the align table are alternately inserted between the zigzag folded separators by the stack table.

An electrode plate-loading device for loading negative electrode plates and positive electrode plates to the align table is described in Korean Patent No. 10-2120799, which is patented by the applicant.

However, the electrode plate-loading device disclosed in Korean Patent No. 10-2120799 has limitations in increasing the loading speed of electrode plates because one absorption plate repeats the process of picking up electrode plates (negative electrode plate, positive electrode plate), loading them on an align table, and then returning for pickup.

### [Disclosure]

### [Technical Problem]

The present disclosure is directed to provide an electrode plate-loading device for secondary batteries in which an operation of picking up an electrode plate and an operation of loading the picked-up electrode plate on an align table can be performed separately, but a plurality of loading units can alternately load the electrode plate picked up by the pick-up operation on the align table.

Furthermore, the problems that the present disclosure seeks to solve are not limited to the technical problems mentioned above, and other technical problems not mentioned will be apparent to one of ordinary skill in the art to which the present disclosure belongs from the following description.

### [Technical Solution]

This section provides a general summary of the disclosure and is not a comprehensive disclosure of its full scope or all of its features.

In order to solve the above problem, an electrode plate-loading device for secondary batteries according to any one of several aspects describing the present disclosure, comprises: a pick-up unit for picking up electrode plates one by one; and first and second loading units for receiving the electrode plates picked up by the pick-up unit and alternately loading them on the align table, in which while the first loading unit performs the operation of loading the received electrode plate on the align table, the second loading unit performs the operation of receiving other electrode plate from the pick-up unit, and while the second loading unit performs the operation of loading the other received electrode plate on the align table, the first loading unit performs the operation of receiving another electrode plate from the pick-up unit.

In an electrode plate-loading device for secondary batteries according to any one of several aspects describing the present disclosure, the pick-up unit may include a pick-up plate for vacuum-absorbing the electrode plate; and an elevating part for being connected to the pick-up plate and for lifting and lowering the pick-up plate so as to vacuum-absorb the electrode plates and to pick up.

In an electrode plate-loading device for secondary batteries according to any one of several aspects describing the present disclosure, the first loading unit may include a first loading plate for receiving electrode plates from the pick-up plate and placing the received electrode plates down on the align table; a first pivot motor for rotating the first loading plate to allow the electrode plate to receive from the pick-up plate or place the received electrode plate down on the align table; and a first moving part for moving the first loading plate in a linear reciprocating motion between the pick-up unit and the align table, in which the second loading unit may include a second loading plate for receiving electrode plate from the pick-up plate and placing the received electrode plate down on the align table; a second pivot motor for rotating the second loading plate so as to receive the electrode plate from the pick-up plate or to place the electrode plate down on the align table; and a second moving part for moving the second loading plate in a linear reciprocating motion between the pick-up unit and the align table.

In an electrode plate-loading device for secondary batteries according to any one of several aspects describing the present disclosure, the pick-up unit may be configured to pick up a plurality of electrode plates inserted in a stacked form in the magazine unit, one by one, in which the pick-up plate is disposed on an upper outer side of the magazine unit to face an open upper side of the magazine unit, and pick-up absorption parts for contacting the surface of the electrode plates inserted in a stacked form in the magazine unit and vacuum-absorbing the electrode plates one by one may be installed on the lower surface of the pick-up plate.

In an electrode plate-loading device for secondary batteries according to any one of several aspects describing the present disclosure, the elevating part may be configured to allow the pick-up plate to lower to the upper side of the magazine unit upon vacuum-absorption of the electrode plate, and allow the pick-up plate to lift to the upper outer side of the magazine unit so that the electrode plate is withdrawn from the magazine unit when the pick-up absorption parts vacuum-absorb the surface of the electrode plate.

In an electrode plate-loading device for secondary batteries according to any one of several aspects describing the present disclosure, each of the first and second loading plates may be configured to have first and second loading absorption parts on a side facing the pick-up plate for receiving and vacuum-absorbing electrode plates from the pick-up plate, and each of the first and second loading plates may be configured to place the electrode plate down on the align table so as to allow a side facing the pick-up plate to face the align table.

In an electrode plate-loading device for secondary batteries according to any one of several aspects describing the present disclosure, the first and second loading plates are disposed between the pick-up unit and the align table; while the first pivot motor pivots the first loading plate toward the pick-up unit, the second pivot motor pivots the second loading plate toward the align table; and while the second pivot motor pivots the second loading plate toward the pick-up unit, the first pivot motor pivots the first loading plate toward the align table, in which the first and second pivot motors pivot the first and second loading plates so that the first and second loading plates form 180-degree angle, and the first and second loading absorption parts face in opposite directions to each other.

In an electrode plate-loading device for secondary batteries according to any one of the various aspects describing the present disclosure, while the first pivot motor pivots the first loading plate in parallel with the pick-up plate toward the pick-up unit, the second pivot motor pivots the second loading plate toward the align table in parallel with a surface of the align table on which the electrode plate is placed; and while the second pivot motor pivots the second loading plate toward the pick-up unit in parallel with the pick-up plate, the first pivot motor pivots the first loading plate toward the align table parallel to a surface of the align table on which the electrode plates are placed.

In an electrode plate-loading device for secondary batteries according to any one of several aspects describing the present disclosure, while the first moving part moves the first loading plate in a straight line to face the other surface of the electrode plate vacuum-absorbed on the pick-up plate, the second moving part moves the second loading plate in a straight line to face the surface of the align table; and while the second moving part moves the second loading plate in a straight line to face the other surface of the electrode plate vacuum-absorbed on the pick-up plate, the first moving part moves the first loading plate in a straight line to face the surface of the align table.

In an electrode plate-loading device for secondary batteries according to any one of several aspects describing the present disclosure, the first and second moving parts may be provided as orthogonal robots with sliders, and the first and second pivot motors connected to the first and second loading plates may be respectively mounted on the sliders of the first and second moving parts.

In an electrode plate-loading device for secondary batteries according to any one of several aspects describing the present disclosure, the first and second loading plates may be parallel up and down and may be arranged to be partially overlapped.

### [Advantageous Effects]

According to the present disclosure, since an operation of picking up electrode plates and an operation of loading the picked-up electrode plates on an align table are performed separately, and the first and second loading units alternately grip the electrode plates picked up by the pick-up unit and load the electrode plates on the align table, it can provide the effect of loading electrode plates on the align table at high speed.

### [Description of Drawings]

FIG. 1 is a schematic perspective view of an electrode plate-loading device for secondary batteries according to the present disclosure.
FIGS 2 to 5 are side views schematically illustrating an electrode plate-loading device for secondary batteries according to the present disclosure, and drawings illustrating an operational state of the electrode plate-loading device for secondary batteries according to the present disclosure.

### [Modes of the Invention]

Hereinafter, embodiments of an electrode plate-loading device for secondary batteries according to the present disclosure will be described in detail with reference to the drawings.

However, the intrinsic technical ideas of the present disclosure are not to be construed as limited by the embodiments described below, but rather encompass the range of possible embodiments that could be readily proposed by a person of ordinary skill in the art based on the intrinsic technical ideas of the present disclosure in the form of substitutions or modifications to the embodiments described below.

Furthermore, the terms used herein are chosen for ease of explanation and should be properly construed in a manner consistent with the technical ideas of the present disclosure, without being limited to their dictionary meanings in order to grasp the technical ideas intrinsic to the present disclosure.

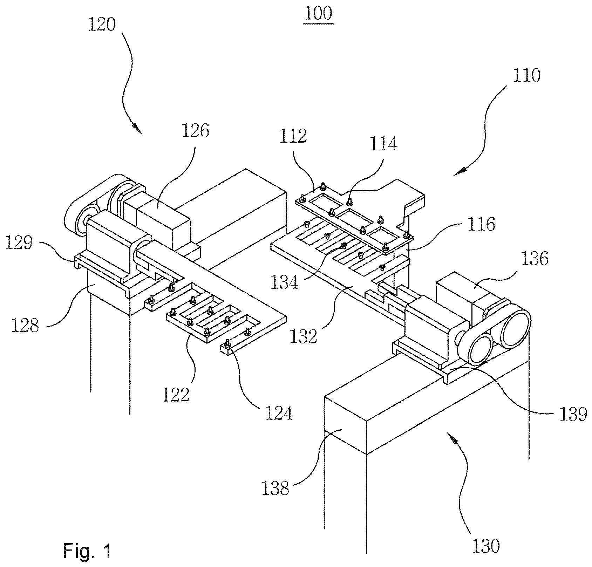

Of the accompanying drawings, FIGS. 1 to 5 are schematically illustrative drawings of an electrode plate-loading device for secondary batteries according to the present disclosure.

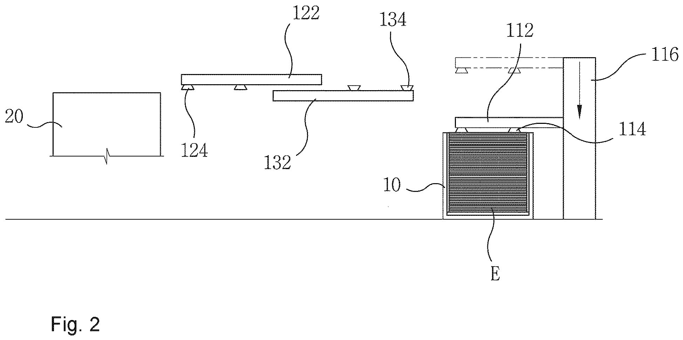

Referring to FIGS. 1 to 5, an electrode plate-loading device 100 for secondary batteries according to the present disclosure includes a pick-up unit 110 for picking up electrode plates E (*see* FIGS. 2 to 5) inserted in a stacked form in a magazine unit 10 (*see* FIGS. 2 to 5) one by one; and the first and second loading units 120, 130 for alternately loading the electrode plates E picked up by the pick-up unit 110 on an align table 20 (*see* FIGS. 2 to 5).

In other words, for the electrode plate-loading device 100 for secondary batteries according to the present disclosure, when the first loading unit 120 loads an electrode plate E on the align table 20, the second loading unit 130 receives the other electrode plate E from the pick-up unit 110; and when the second loading unit 130 loads the other received electrode plate E on the align table 20, the first loading unit 120 receives another electrode plate E from the pick-up unit 110.

Accordingly, the electrode plate-loading device 100 for secondary batteries according to the present disclosure allows electrode plates E inserted in a stacked form in the magazine unit 10 to be loaded on the align table 20 one by one at high speed.

Here, the electrode plate E may be a negative electrode plate or a positive electrode plate, and the electrode plates E aligned on the align table 20 are inserted between separators (not illustrated) that are folded in a zigzag shape by the stack table (not illustrated).

For the present disclosure, a detailed description about the magazine unit 10 and the align table 20 will be omitted, but the top of the magazine unit 10 is open for the electrode plates E to be picked up.

The pick-up unit 110 and the first and second loading units 120, 130 that constitute the electrode plate-loading device 100 for secondary batteries according to the present disclosure will be described below.

First, the pick-up unit 110 includes a pick-up plate 112 for vacuum-absorbing the electrode plate E, and an elevating part 116 for lifting and lowering the pick-up plate 112 so that the electrode plate E can be vacuum-absorbed and picked up.

The pick-up plate 112 is provided in the shape of an approximately horizontal plate and is disposed on the upper outer side of the magazine unit 10 so that its lower face side faces the open upper side of the magazine unit 10.

At this time, conventional pick-up absorption parts 114 are installed on the lower surface of the pick-up plate 112, which contacts the surface of the electrode plate E and vacuum-absorbs the electrode plate E.

As anyone can see, the pick-up absorption parts 114 are provided with vacuum pressure from a vacuum generator (not illustrated) to vacuum-absorb the electrode plates E and lower the vacuum-absorbed electrode plates E upon loss of vacuum pressure.

The pick-up absorption parts 114 are disclosed in the art and will not be described in detail, and the connection relationship between the pick-up absorption parts 114 and the vacuum generator is also disclosed in the art and will not be described in detail.

On the other hand, the elevating part 116 is disposed adjacent to the magazine unit 10 so as not to be interfered with the magazine unit 10 and the first and second loading units 120, 130.

The elevating part 116 lowers the pick-up plate 112 to the upper side of the magazine unit 10 when the electrode plate E is vacuum-absorbed. Also, the elevating part 116 lifts the pick-up plate 112 to the upper outer side of the magazine unit 10 so that the electrode plate E is withdrawn from the magazine unit 10 when the pick-up absorption parts 114 vacuum-absorb the surface of the electrode plate E.

At this time, the following electrode plate E that rises along the absorbed electrode plate E in the process of lifting the pick-up plate 112 by the elevating part 116 is naturally separated by vibration or the like.

Here, the elevating part 116 may be provided as a conventional orthogonal robot or a conventional pneumatic cylinder, and the connection relationship between the elevating part 116 provided as an orthogonal robot or a pneumatic cylinder and the pick-up plate 112 is well known in the art and thus will not be described in detail.

The first loading unit 120 may include a first loading plate 122 that receives the electrode plates E from the pickup plate 112 and places them down on the align table 20, a first pivot motor 126 that rotates the first loading plate 122 to allow the electrode plate E to be received from the pickup plate 112 or to allow the electrode plate E to be placed down on the align table 20, and a first moving part 128 that moves the first loading plate 122 in a linear reciprocating motion between the pick-up unit 110 and the align table 20.

Likewise, the second loading unit 130 may include a second loading plate 132 that receives the electrode plate E from the pick-up plate 112 and places the electrode plate E down on the align table 20, a second pivot motor 136 that rotates the second loading plate 132 to allow the electrode plate E to be received from the pick-up plate 112 or to place the electrode plate E down on the align table 20, and a second moving part 138 that moves the second loading plate 132 in a linear reciprocating motion between the pick-up unit 110 and the align table 20.

The first and second loading plates 122, 132 are provided in the shape of an approximately horizontal plate and are disposed between the pick-up unit 110 and the align table 20 so as not to be interfered with each other.

Preferably, the first and second loading plates 122, 132 are arranged up and down so that they are partially overlapped.

At this time, the first and second loading absorption parts 124, 134 are installed on the facing sides of the first and second loading plates 122, 132, respectively, which receive the electrode plate E from the pick-up plate 112, vacuum-absorb the received electrode plate E, and place the electrode plate E down on the align table 20.

For example, conventional first loading absorption parts 124 are installed on the lower surface of the facing first loading plate 122, and conventional second loading absorption parts 134 are installed on the upper surface of the second loading plate 132.

As anyone can see, the first and second loading absorption parts 124, 134 are provided with vacuum pressure from a vacuum generator (not illustrated) to vacuum-absorb the electrode plate E, and place down the vacuum-absorbed electrode plate E upon loss of the vacuum pressure.

The first and second loading absorption parts 124, 134 are disclosed in the art and thus will not be described in detail, and the connection relationship between the first and second loading absorption parts 124, 134 and the vacuum generator is also disclosed in the art and thus will not be described in detail.

The first and second pivot motors 126, 136 are connected to one side and the other side of the first and second loading plates 122, 132, respectively.

The first and second pivot motors 126, 136 connected above pivot the first and second loading plates 122, 132 so that the first and second loading absorption parts 124, 134 face the other surface of the electrode plate E vacuum-absorbed on the pick-up plate 112 when receiving the electrode plate E from the pick-up plate 112.

The first and second pivot motors 126, 136 pivot the first and second loading plates 122, 132 so that the first and second loading absorption parts 124, 134 face the surface of the align table 20 when the electrode plates E vacuum-absorbed on the first and second loading plates 122, 132 are lowered on the align table 20.

Here, the connection relationship between the first and second pivot motors 126, 136 and the first and second loading plates 122, 132 is not particularly limited in the present disclosure. In other words, the first and second pivot motors 126, 136 and the first and second loading plates 122, 132 may be connected in any way, as long as the first and second pivot motors 126, 136 can pivot the first and second loading plates 122, 132.

Meanwhile, the first and second moving parts 128, 138 are disposed between one side and the other side of the pick-up unit 110 and the align table 20 without interfering with the pick-up unit 110.

The first and second moving parts 128, 138 move the first and second loading plates 122, 132 to face the other surface of the electrode plate E vacuum-absorbed on the pick-up plate 112 when receiving the electrode plate E from the pick-up plate 112.

The first and second moving parts 128, 138 then move the first and second loading plates 122, 132 toward the align table 20 so that the electrode plate E can be lowered on the align table 20.

Here, the first and second moving parts 128, 138 are provided as conventional orthogonal (coordinate) robots having sliders 129, 139, and the first and second pivot motor 126, 136 connected to the first and second loading plate 122, 132 are mounted on the sliders 129, 139 of the first and second moving parts 128, 138, respectively.

The operation state of an electrode plate-loading device 100 for secondary batteries according to the present disclosure formed as described above will be described in detail below.

In order to load the electrode plates E inserted in a stacked form in the magazine unit 10 on the align table 20, the pick-up unit 110 first operates the elevating part 116 to lower the pick-up plate 112 to the upper side of the magazine unit 10 (*see* FIG. 2).

At this time, the pick-up absorption parts 114 contact the surface of the electrode plate E and then vacuum-absorb the electrode plate E.

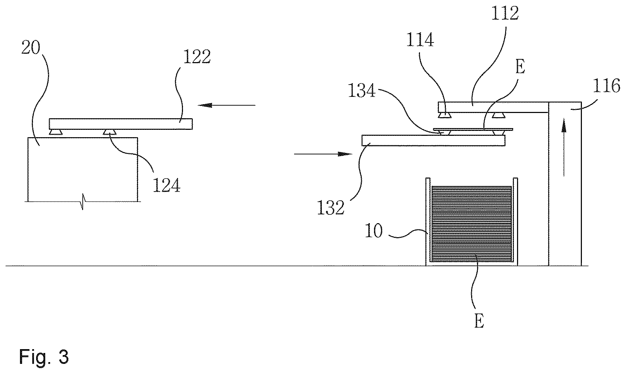

Also, as described above, when the pick-up absorption parts 114 vacuum-absorb the surface of the electrode plate E, the elevating part 116 lifts the pick-up plate 112 to the upper outer side of the magazine unit 10 so that the electrode plate E is withdrawn from the magazine unit 10 (*see* FIG. 3).

As described above, when the electrode plate E is withdrawn from the magazine unit 10 and is lifted to the upper outer side of the magazine unit 10, the second loading unit 130 operates the second moving part 138 to receive the electrode plate E from the pick-up unit 110, and moves the second loading plate 132 to face the other surface of the electrode plate E that is vacuum-absorbed on the pick-up plate 112. At the same time, the first loading unit 120 operates the first moving part 128 to move the first loading plate 122 to face the surface of the align table 20 (*see* FIG. 3).

At this time, the vacuum pressure is lost in the pick-up absorption parts 114 and the vacuum pressure is applied to the second loading absorption part 134 of the second loading plate 132, thereby causing the electrode plate E to be disengaged from the pick-up absorption parts 114 and vacuum-absorbing the electrode plate E by the second loading absorption part 134.

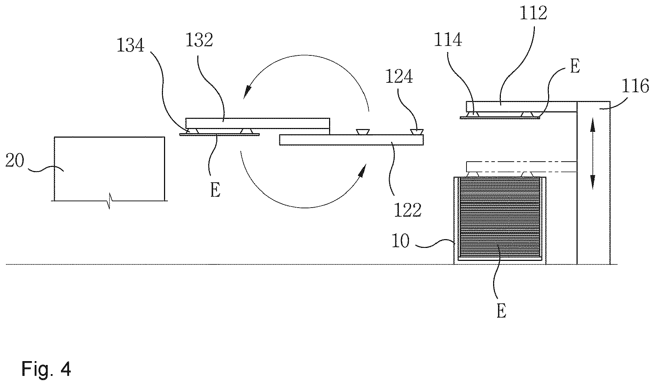

Also, as described above, when the second loading plate 132 receives the electrode plate E from the pick-up plate 112, the first and second loading unit 120, 130 operate the first and second moving parts 128, 138 to move the first and second loading plates 122, 132 between the pick-up unit 110 and the align table 20. When the first and second loading plates 122, 132 are moved between the pick-up unit 110 and the align table 20, the first and second loading unit 120, 130 operate the first and second pivot motors 126, 136 to rotate the first and second loading plates 122, 132 180 degrees (*see* FIG. 4).

At this time, the pick-up unit 110 operates the elevating part 116 to lower the pick-up plate 112 to the upper side of the magazine unit 10, and applies vacuum pressure to the pick-up absorption parts 114, thereby vacuum-absorbing the other electrode plate E. The elevating part 116 then lifts the pick-up plate 112 to the upper outer side of the magazine unit 10 so that the other electrode plate E is withdrawn from the magazine unit 10 (*see* FIG. 4).

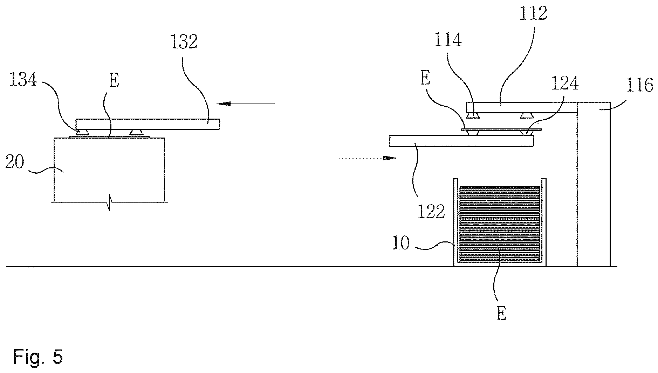

Meanwhile, as described above, when the first and second loading plates 122, 132 are rotated 180 degrees, and the pick-up unit 110 vacuum-absorbs the other electrode plate E and withdraws the vacuum-absorbed electrode plate E from the magazine unit 10, the second loading unit 130 operates the second moving part 138 to move the second loading plate 132 to face the surface of the align table 20 so that the electrode plate E can be lowered on the surface of the align table 20. At the same time, the first loading unit 120 operates the first moving part 128 to receive the electrode plate E from the pick-up unit 110 and moves the first loading plate 122 to face the other surface of the electrode plate E vacuum-absorbed on the pick-up plate 112 (*see* FIG. 5).

At this time, when the second loading plate 132 is moved to face the surface of the align table 20, the second loading absorption part 134 lose vacuum pressure, thereby causing the electrode plate E, which is vacuum-absorbed on the second loading plate 132, to be disengaged from the second loading plate 132 and to settle on the surface of the align table 20. At the same time, the vacuum pressure is lost in the pick-up absorption parts 114 and a vacuum pressure is applied to the first loading absorption part 124 side of the first loading plate 122, thereby causing the other electrode plate E to be disengaged from the pick-up absorption part 114 and vacuum-absorbing the other electrode plate E by the first loading absorption part 124.

Also, when the first loading plate 122 vacuum-absorbs the other electrode plate E as described above, the first and second loading unit 120, 130 and the pick-up unit 110 load the electrode plates E inserted in a stacked from in the magazine unit 10 on the align table 20 while performing the operations illustrated in FIGS. 3 to 5.

According to an electrode plate-loading device for secondary batteries according to the present disclosure 100 formed as described above, when the first loading unit 120 receives the electrode plate E picked up by the pick-up unit 110, the second loading unit 130 loads the electrode plate E on the align table 20; and when the second loading unit 130 receives the picked-up electrode plate E, the first loading unit 120 loads the electrode plate E on the align table 20.

Thus, while one of the first and second loading units 120, 130 loads the received electrode plates E on the align table 20 and is returned, the other receives the electrode plates E picked up by the pick-up unit 110 and performs the operation of loading the electrode plates E on the align table 20. As a result, it is possible to load the electrode plates E on the align table 20 at high speed compared to a conventional electrode plate-loading device.

## Claims

1. An electrode plate-loading device for secondary batteries, the electrode plate-loading device comprising:
a pick-up unit for picking up electrode plates one by one; and
first and second loading units for receiving the electrode plates picked up by the pick-up unit and alternately loading the received electrode plates on the align table,
wherein while the first loading unit performs the operation of loading the received electrode plate on the align table, the second loading unit performs the operation of receiving another electrode plate from the pick-up unit, and
wherein while the second loading unit performs the operation of loading the other received electrode plate on the align table, the first loading unit performs the operation of receiving another electrode plate from the pick-up unit.

2. The electrode plate-loading device for secondary batteries of claim 1,
wherein the pick-up unit comprises,
a pick-up plate for vacuum-absorbing the electrode plate; and
an elevating part for being connected to the pick-up plate and for lifting and lowering the pick-up plate so as to vacuum-absorb the electrode plates and to pick up.

3. The electrode plate-loading device for secondary batteries of claim 2,
wherein the first loading unit comprises,
a first loading plate for receiving electrode plates from the pick-up plate and placing the received electrode plates down on the align table;
a first pivot motor for rotating the first loading plate to allow the electrode plate to receive from the pick-up plate or place the electrode plate down on the align table; and
a first moving part for moving the first loading plate in a linear reciprocating motion between the pick-up unit and the align table, and
wherein the second loading unit comprises,
a second loading plate for receiving electrode plates from the pick-up plate and placing the received electrode plates down on the align table;
a second pivot motor for rotating the second loading plate so as to receive electrode plate from the pick-up plate or to place electrode plate down on the align table; and
a second moving part for moving the second loading plate in a linear reciprocating motion between the pick-up unit and the align table.

4. The electrode plate-loading device for secondary batteries of claim 2,
wherein the pick-up unit is configured to pick up a plurality of electrode plates inserted in a stacked form in the magazine unit, one by one,
wherein the pick-up plate is disposed on an upper outer side of the magazine unit to face an open upper side of the magazine unit, and
wherein pick-up absorption parts for contacting the surface of the electrode plates inserted in a stacked form in the magazine unit and vacuum-absorbing electrode plates one by one are installed on the lower surface of the pick-up plate.

5. The electrode plate-loading device for secondary batteries of claim 4,
wherein the elevating part allows the pick-up plate to lower to the upper side of the magazine unit upon vacuum-absorption of the electrode plate, and allows the pick-up plate to lift to the upper outer side of the magazine unit so that the electrode plate is withdrawn from the magazine unit when the pick-up absorption parts vacuum-absorb the surface of the electrode plate.

6. The electrode plate-loading device for secondary batteries of claim 3,
wherein each of the first and second loading plates has first and second loading absorption parts on a side facing the pick-up plate for receiving and vacuum-absorbing electrode plates from the pick-up plate, and
wherein each of the first and second loading plates places the electrode plate down on the align table so as to allow a side facing the pick-up plate to face the align table.

7. The electrode plate-loading device for secondary batteries of claim 6,
wherein the first and second loading plates are disposed between the pick-up unit and the align table,
while the first pivot motor pivots the first loading plate toward the pick-up unit, the second pivot motor pivots the second loading plate toward the align table, and
while the second pivot motor pivots the second loading plate toward the pick-up unit, the first pivot motor pivots the first loading plate toward the align table, and
wherein the first and second pivot motors pivot the first and second loading plates so that the first and second loading plates form 180-degree angle, and the first and second loading absorption parts face in opposite directions to each other.

8. The electrode plate-loading device for secondary batteries of claim 7,
wherein while the first pivot motor pivots the first loading plate in parallel with the pick-up plate toward the pick-up unit, the second pivot motor pivots the second loading plate toward the align table in parallel with a surface of the align table on which the electrode plate is placed, and
while the second pivot motor pivots the second loading plate toward the pick-up unit in parallel with the pick-up plate, the first pivot motor pivots the first loading plate toward the align table parallel to a surface of the align table on which the electrode plates are placed.

9. The electrode plate-loading device for secondary batteries of claim 8,
wherein while the first moving part moves the first loading plate in a straight line to face the other surface of the electrode plate vacuum-absorbed on the pick-up plate, the second moving part moves the second loading plate in a straight line to face the surface of the align table, and
while the second moving part moves the second loading plate in a straight line to face the other surface of the electrode plate vacuum-absorbed on the pick-up plate, the first moving part moves the first loading plate in a straight line to face the surface of the align table.

10. The electrode plate-loading device for secondary batteries of claim 9,
wherein the first and second moving parts are provided as orthogonal robots with sliders, and
wherein the first and second pivot motors connected to the first and second loading plates are respectively mounted on the sliders of the first and second moving parts.

11. The electrode plate-loading device for secondary batteries of claim 7,
wherein the first and second loading plates are parallel up and down and are arranged to be partially overlapped.
